# EUROPEAN PATENT APPLICATION

(11) **EP 4 379 535 A1**
(43) Date of publication of application: **05.06.2024**
(21) Application number: 22275149.7
(22) Date of filing: 29.11.2022
(51) Int. Cl.: G06F 3/18, G06F 30/18

(54) **PIPE LAYOUT AND ANALYSIS**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

In some examples, a computer-implemented method for generating a pipe layout for a platform comprises receiving design data representing a pipe geometry defining an initial pipe layout, generating, using the design data, geometry data representing a set of pipework runs comprising at least one pipe section for the pipe layout, a pipe section defined by a conduit comprising a point of ingress for the conduit in fluid communication with a point of egress for the conduit, determining, using the design data, a set of pipe layout features, generating, using the geometry data, an editable simulated pipe layout, receiving data representing at least one of a component for the editable simulated pipe layout, an annotation for the editable simulated pipe layout, an additional pipework run, and a corrected pipework run, and generating, using the editable simulated pipe layout, output layout data defining the pipe layout for the platform.

## Description

### FIELD

The present invention relates to the layout modelling and analysis of pipework.

### BACKGROUND

There are many instances where, in the design of a platform, such as vehicular platform for example such as an aircraft, multiple different components must be matched together so that they are able to perform their intended function within a designated space and without interfering with the function of any other component. As an example, pipework defined according to a pipe layout for a platform can be used for the purposes of, e.g., fuel delivery, air intakes, exhausting waste gases and so on. Such a pipe layout may be subordinate to other features of platform, meaning that, for example, the layout is designed to make use of dead or suitable unutilized space within a platform in order to, e.g., minimize the size of the platform. As such, pipe layouts can often define very sinuous routes through a platform, whilst also needing to maintain certain characteristics, such as being able to accommodate pressurized fluid flows and flow rates etc.

### SUMMARY

An objective of the present disclosure is to provide a streamlined method for generating a pipe layout for a platform.

The foregoing and other objectives are achieved by the features of the independent claims.

Further implementation forms are apparent from the dependent claims, the description and the Figures.

A first aspect of the present disclosure provides a computer-implemented method for generating a pipe layout for a platform, the method comprising receiving design data representing a pipe geometry defining an initial pipe layout, generating, using the design data, geometry data representing a set of pipework runs comprising at least one pipe section for the pipe layout, a pipe section defined by a conduit comprising a point of ingress for the conduit in fluid communication with a point of egress for the conduit, determining, using the design data, a set of pipe layout features, generating, using the geometry data, an editable simulated pipe layout, receiving data representing at least one of a component for the editable simulated pipe layout, an annotation for the editable simulated pipe layout, an additional pipework run, and a corrected pipework run, and generating, using the editable simulated pipe layout, output layout data defining the pipe layout for the platform.

In an implementation of the first aspect, the method can further comprise, using the output layout data, generating data representing at least one of a load profile for a pipework run, and a load profile for a component. The method can further comprise defining a set of configuration data comprising at least one of a material definition for a pipework run, and a material definition for a component. The method can further comprise using the configuration data and the output layout data to perform an analysis for the pipe layout, whereby to simulate a reaction of at least one pipework run under a predefined load. The method can further comprise representing the geometry data as a marked-up set of data forming an extendable project.

A second aspect of the present disclosure provides apparatus for generating a pipe layout for a platform, the apparatus comprising a processor, a memory coupled to the processor, the memory configured to store program code executable by the processor, the program code comprising one or more instructions, whereby to cause the apparatus to receive design data representing a pipe geometry defining an initial pipe layout, generate, using the design data, geometry data representing a set of pipework runs comprising at least one pipe section for the pipe layout, a pipe section defined by a conduit comprising a point of ingress for the conduit in fluid communication with a point of egress for the conduit, determine, using the design data, a set of pipe layout features, generate, using the geometry data, an editable simulated pipe layout, receive data representing at least one of a component for the editable simulated pipe layout, an annotation for the editable simulated pipe layout, an additional pipework run, and a corrected pipework run, and generate, using the editable simulated pipe layout, output layout data defining the pipe layout for the platform.

In an implementation of the second aspect, the program code can comprise one or more further instructions, whereby to cause the apparatus to using the output layout data, generate data representing at least one of a load profile for a pipework run, and a load profile for a component. The program code can comprise one or more further instructions, whereby to cause the apparatus to define a set of configuration data comprising at least one of a material definition for a pipework run, and a material definition for a component. The program code can comprise one or more further instructions, whereby to cause the apparatus to simulate a reaction of at least one pipework run under a predefined load using the configuration data and the output layout data.

These and other aspects of the invention will be apparent from the embodiment(s) described below.

### BRIEF DESCRIPTION OF THE FIGURES

Embodiments of the invention will now be described by way of example only with reference to the figures, in which:
Figure 1 is a flowchart of a method according to an example; and
Figure 2 is a schematic representation of an apparatus according to an example.

### DETAILED DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

Computer-aided design (CAD) and analysis tools such as, e.g., CATIA are commonly used for modelling structures, such as pipework layouts. Once designed, these pipework layouts are manually entered into specialist pipework modelling tools used for determining appropriate pipework materials, fittings and thicknesses based on characteristics such as intended flow material and pressures. However, there is presently a disconnect between CAD tools and pipework modelling tools. As such, users must manually enter pipework designs into pipework modelling software. Each set of analysis results must then be manually extracted, post processed and combined to generate summary reports.

According to an example, there is provided a computer-implemented method for generating a pipe layout for a platform. The platform can be a static or moving platform, such as a vehicular platform for example. The pipe payout can be a layout used for piping, channels or conduit. For example, the pipe layout can define a pathway for pipework used for the supply of fuel or for the exhaust of waste products. Alternatively, a pipe layout can be for conduit used to channel cabling within a platform.

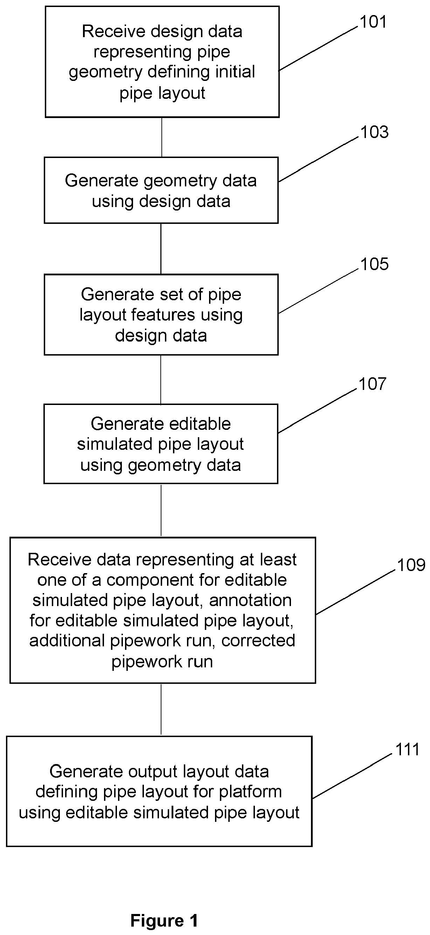

Figure 1 is a flowchart of a method according to an example. In block 101, design data representing a pipe geometry defining an initial pipe layout is received. The design data can comprise data representing a three-dimensional initial pipe layout, which defines the relative size, position and arrangement of components for the initial pipe layout. In an example, an initial pipe layout can comprise a relatively high level representation of a pipe layout for use with a platform, which can be used to, e.g., enable a pipe layout to be broadly defined in order to map it to an available space and/or in terms of one or more functions or parameters relating to, for example, characteristics of a flow for the pipe layout. For example, an initial pipe layout can be defined in terms of shape, which stems from a route to be taken through a platform such that, e.g., unutilized space can be used to accommodate a pipe layout. In addition, or in isolation from considerations relating to using unutilized portions of a platform, an initial pipe layout can be defined in terms of function, such that a geometry is configured to regulate characteristics of a gaseous/fluid flow for the platform.

In block 103, geometry data is generated using the design data. In an example, the geometry data represents a set of pipework runs comprising at least one pipe section for the pipe layout. A pipe section can be defined as, e.g., a conduit comprising a point of ingress for the conduit in fluid communication with a point of egress for the conduit. Accordingly, the design data, representing the initial pipe layout for a platform, can be used to generate geometry data defining a set of, e.g., components for the pipe layout, which can comprise individual pipe runs (which may be straight or curvilinear sections of conduit) that can be composed from one or more distinct sections of piping that can be joined together.

In block 105, the design data is used to generate a set of pipe layout features. For example, components or fittings used to enable sections of conduit to be joined together or otherwise enabling some other function can be provided. Such pipe layout features can comprise, e.g., reducers, tee type fittings, cross type fittings, couplings, unions, adaptors, outlets, inlets, plugs, caps, valve bends, joins and so on.

In block 107, the geometry data is used to generate an editable simulated pipe layout. In an example, the editable simulated pipe layout comprises the set of pipework runs and the set of pipework fittings. The editable simulated pipe layout provides a representation that enables a user to view and interact with the pipe layout. That is, a user can view a representation defining a simulated version of a pipe layout composed of the set of pipe runs and the set of layout features. In an example, a display device can be used to display the editable simulated pipe layout to a user. A GUI may be provided in order to enable the user to, for example, edit a component of the pipe layout, such as a pipe run or feature. Accordingly, in block 109, data representing at least one of a component for the editable simulated pipe layout, an annotation for the editable simulated pipe layout, an additional pipework run, and a corrected pipework run can be received in order to enable the editable simulated pipe layout to be at least one of augmented, modified, annotated, whereby to, e.g., organise and label pipes or to add connectors, fittings, brackets and the like, or to add in pipes where the initial layout was insufficient or had errors.

In block 111, using the editable simulated pipe layout, output layout data defining the pipe layout for the platform can be generated. The output layout data can represent a final version for a pipe layout that can be used to generate, e.g., mock ups and/or serve as a basis for further design or manufacture of a pipe or component.

In an example, the output layout data can be used to generate data representing at least one of a load profile for a pipework run, and a load profile for a component. The load profile can define a degree of stress that a component and/or pipework run will experience under load from, e.g., a gas or fluid flowing at a desired flow rate and pressure and so on. A load profile can be represented diagrammatically and/or by overlaying information over a pipe layout using the GUI, such as colour coded information representing a degree of stress or load at one or more particular points of a pipework run and/or component.

Configuration data comprising at least one of a material definition for a pipework run, and a material definition for a component can be provided as part of the process to, e.g., generate the editable simulated pipe layout. In another example, such configuration data can be provided as part of the design and/or geometry data. A material definition can comprise a type of material to be used for a pipework run and/or component. In an example, the configuration data can be used as part of an analysis routine for a pipe layout, whereby to simulate a reaction of at least one pipework run under a predefined load for a given material, thereby enabling easier material selection.

As noted above, modification of existing designs associated with typical pipework modelling and analysis tools is often laborious meaning that adaptation or extension of existing designs is often problematic. According to an example, geometry data can comprise a marked-up set of data forming an extendable project. As such, a project can be revisited at a later date and easily modified, such as by changing at least one of a pipework run, component and material.

Examples in the present disclosure can be provided as methods, systems or machine-readable instructions, such as any combination of software, hardware, firmware or the like. Such machine-readable instructions may be included on a computer readable storage medium (including but not limited to disc storage, CD-ROM, optical storage, etc.) having computer readable program codes therein or thereon.

The present disclosure is described with reference to flow charts and/or block diagrams of the method, devices and systems according to examples of the present disclosure. Although the flow diagrams described above show a specific order of execution, the order of execution may differ from that which is depicted. Blocks described in relation to one flow chart may be combined with those of another flow chart. In some examples, some blocks of the flow diagrams may not be necessary and/or additional blocks may be added. It shall be understood that each flow and/or block in the flow charts and/or block diagrams, as well as combinations of the flows and/or diagrams in the flow charts and/or block diagrams can be realized by machine readable instructions.

The machine-readable instructions may, for example, be executed by a machine such as a general-purpose computer, a platform comprising user equipment such as a smart device, e.g., a smart phone, a special purpose computer, an embedded processor or processors of other programmable data processing devices to realize the functions described in the description and diagrams. In particular, a processor or processing apparatus may execute the machine-readable instructions. Thus, modules of apparatus may be implemented by a processor executing machine readable instructions stored in a memory, or a processor operating in accordance with instructions embedded in logic circuitry. The term 'processor' is to be interpreted broadly to include a CPU, processing unit, ASIC, logic unit, or programmable gate set etc. The methods and modules may all be performed by a single processor or divided amongst several processors.

Such machine-readable instructions may also be stored in a computer readable storage that can guide the computer or other programmable data processing devices to operate in a specific mode. For example, the instructions may be provided on a non-transitory computer readable storage medium encoded with instructions, executable by a processor.

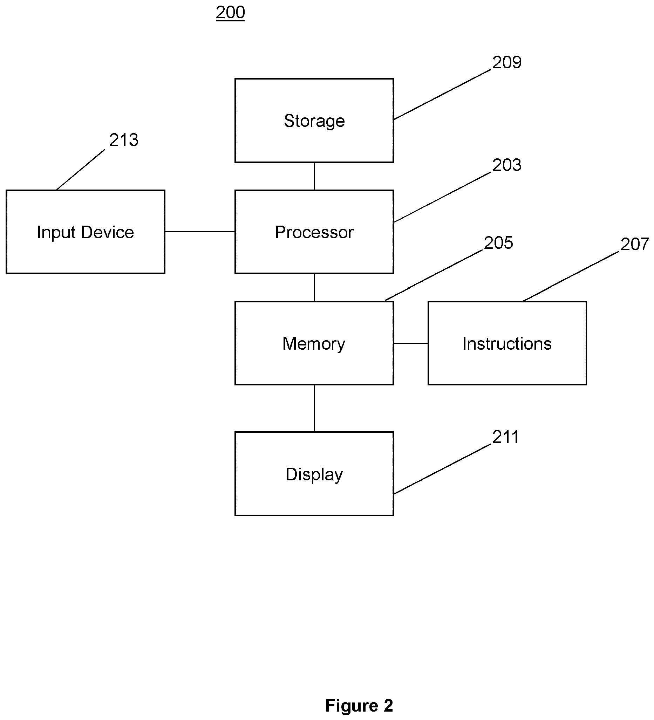

Figure 2 is a schematic representation of a machine according to an example. The machine 200 can be, e.g., a system or apparatus, user equipment, or part thereof. The machine 200 comprises a processor 203, and a memory 205 to store instructions 207, executable by the processor 203. The machine comprises a storage 209 that can be used to store data representing design data, geometry data, output layout data, configuration data and so on as described above with reference to figure 1 for example.

The instructions 207, executable by the processor 203, can cause the machine 200 to present information on a display 211 such as a simulated editable pipe layout and so on, as well as a GUI enabling user interaction by way of one or more input devices 213. In an example, instructions 207, executable by the processor 203, can cause the machine 200 to receive design data representing a pipe geometry defining an initial pipe layout, generate, using the design data, geometry data representing a set of pipework runs comprising at least one pipe section for the pipe layout, a pipe section defined by a conduit comprising a point of ingress for the conduit in fluid communication with a point of egress for the conduit, determine, using the design data, a set of pipe layout features, generate, using the geometry data, an editable simulated pipe layout, receive data representing at least one of a component for the editable simulated pipe layout, an annotation for the editable simulated pipe layout, an additional pipework run, and a corrected pipework run, and generate, using the editable simulated pipe layout, output layout data defining the pipe layout for the platform.

Accordingly, the machine 200 can implement a method for generating a pipe layout for a platform.

Such machine-readable instructions may also be loaded onto a computer or other programmable data processing devices, so that the computer or other programmable data processing devices perform a series of operations to produce computer-implemented processing, thus the instructions executed on the computer or other programmable devices provide an operation for realizing functions specified by flow(s) in the flow charts and/or block(s) in the block diagrams.

Further, the teachings herein may be implemented in the form of a computer or software product, such as a non-transitory machine-readable storage medium, the computer software or product being stored in a storage medium and comprising a plurality of instructions, e.g., machine readable instructions, for making a computer device implement the methods recited in the examples of the present disclosure.

In some examples, some methods can be performed in a cloud-computing or network-based environment. Cloud-computing environments may provide various services and applications via the Internet. These cloud-based services (e.g., software as a service, platform as a service, infrastructure as a service, etc.) may be accessible through a web browser or other remote interface of the user equipment for example. Various functions described herein may be provided through a remote desktop environment or any other cloud-based computing environment.

While various embodiments have been described and/or illustrated herein in the context of fully functional computing systems, one or more of these exemplary embodiments may be distributed as a program product in a variety of forms, regardless of the particular type of computer-readable-storage media used to actually carry out the distribution. The embodiments disclosed herein may also be implemented using software modules that perform certain tasks. These software modules may include script, batch, or other executable files that may be stored on a computer-readable storage medium or in a computing system. In some embodiments, these software modules may configure a computing system to perform one or more of the exemplary embodiments disclosed herein. In addition, one or more of the modules described herein may transform data, physical devices, and/or representations of physical devices from one form to another.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the spirit and scope of the instant disclosure. The embodiments disclosed herein should be considered in all respects illustrative and not restrictive. Reference should be made to the appended claims and their equivalents in determining the scope of the instant disclosure.

## Claims

1. A computer-implemented method for generating a pipe layout for a platform, the method comprising:
receiving design data representing a pipe geometry defining an initial pipe layout;
generating, using the design data, geometry data representing a set of pipework runs comprising at least one pipe section for the pipe layout, a pipe section defined by a conduit comprising a point of ingress for the conduit in fluid communication with a point of egress for the conduit;
determining, using the design data, a set of pipe layout features;
generating, using the geometry data, an editable simulated pipe layout;
receiving data representing at least one of a component for the editable simulated pipe layout, an annotation for the editable simulated pipe layout, an additional pipework run, and a corrected pipework run; and
generating, using the editable simulated pipe layout, output layout data defining the pipe layout for the platform.

2. The computer-implemented method as claimed in claim 1, further comprising:
using the output layout data, generating data representing at least one of a load profile for a pipework run, and a load profile for a component.

3. The computer-implemented method as claimed in claim 2, further comprising:
defining a set of configuration data comprising at least one of a material definition for a pipework run, and a material definition for a component.

4. The computer-implemented method as claimed in claim 3, further comprising:
using the configuration data and the output layout data to perform an analysis for the pipe layout, whereby to simulate a reaction of at least one pipework run under a predefined load.

5. The computer-implemented method as claimed in any preceding claim, wherein the geometry data comprises a marked-up set of data forming an extendable project.

6. Apparatus for generating a pipe layout for a platform, the apparatus comprising;
a processor;
a memory coupled to the processor, the memory configured to store program code executable by the processor, the program code comprising one or more instructions, whereby to cause the apparatus to:
receive design data representing a pipe geometry defining an initial pipe layout;
generate, using the design data, geometry data representing a set of pipework runs comprising at least one pipe section for the pipe layout, a pipe section defined by a conduit comprising a point of ingress for the conduit in fluid communication with a point of egress for the conduit;
determine, using the design data, a set of pipe layout features;
generate, using the geometry data, an editable simulated pipe layout;
receive data representing at least one of a component for the editable simulated pipe layout, an annotation for the editable simulated pipe layout, an additional pipework run, and a corrected pipework run; and
generate, using the editable simulated pipe layout, output layout data defining the pipe layout for the platform.

7. The apparatus as claimed in claim 6, the program code comprising one or more further instructions, whereby to cause the apparatus to:
using the output layout data, generate data representing at least one of a load profile for a pipework run, and a load profile for a component.

8. The apparatus as claimed in claim 6 or 7, the program code comprising one or more further instructions, whereby to cause the apparatus to:
define a set of configuration data comprising at least one of a material definition for a pipework run, and a material definition for a component.

9. The apparatus as claimed in any of claims 6 to 8, the program code comprising one or more further instructions, whereby to cause the apparatus to:
simulate a reaction of at least one pipework run under a predefined load using the configuration data and the output layout data.
